# EUROPEAN PATENT APPLICATION

(11) **EP 4 696 571 A1**
(43) Date of publication of application: **18.02.2026**
(21) Application number: 25196006.8
(22) Date of filing: 14.08.2025
(51) Int. Cl.: B60T 17/22, F16D 66/02, F16D 66/00

(54) **VEHICLE MONITORING SYSTEM**

(30) Priority: 16.08.2024 GB 202412130
(71) Applicant: Haldex AB, 261 24 Landskrona (SE)
(72) Inventor: Price, Gary Alan, Lindley, CV13 6DE (GB); Ionascu, Mihai, Lindley, CV13 6DE (GB)
(74) Representative: Müller Schupfner & Partner Patent- und Rechtsanwaltspartnerschaft mbB (Muc)

(57) **Abstract**

An electronic vehicle monitoring system (10) including a plurality of sensors (12), each sensor (12) being configured to monitor a component, assembly or system of a vehicle, a control unit (14) configured to receive data relating to the or each monitored component, assembly or system, and a communication channel (16) between each sensor (12) and the control unit (14), wherein the communication channel (16) is configured to receive inputs from two or more of the sensors (12) and to provide outputs relating to each of the sensor inputs to the control unit (14) via a common output, and a method of monitoring vehicle data.

## Description

### FIELD

The invention relates to a vehicle monitoring system and method of vehicle monitoring, for example, to a brake pad wear monitoring system, a temperature monitoring system, etc.

### BACKGROUND

Collection and monitoring of vehicle data is very important, to notify a driver, for example, of a fault and/or the need to carry out checks or maintenance. This is particularly important in commercial vehicles, where faults can lead to vehicle downtime, and lost revenue, and where vehicles may travel very long distances, before returning to an appropriate location to carry out general maintenance or checks. For fleet vehicles, maintenance typically needs to be scheduled and co-ordinated across the fleet, and in accordance with vehicle locations. The ability to collect data while the vehicle is in use, and to communicate relevant vehicle data to the driver and/or to a control centre without having to carry out manual checks of individual components is advantageous. Data collection and communication in the vehicle should be as accurate as possible, and it is desirable to have robust monitoring systems where the risk of failure of the system is as low as possible.

It is known to monitor wear of brake pads in a vehicle by running a wire around to each brake calliper, in series. This configuration enables a very basic "good/bad" indication of the condition of the brake pad. When one of the brake pads wears down beyond an acceptable threshold, the wire touches a contact in the brake pad, completing the warning circuit and generating a warning signal.

### BRIEF DESCRIPTION OF THE INVENTION

The invention is as set out in the claims.

There is provided an electronic vehicle monitoring system including a plurality of sensors, each sensor being configured to monitor a component, assembly or system of a vehicle, a control unit configured to receive data relating to the or each monitored component, assembly or system, and a communication channel between each sensor and the control unit, wherein the communication channel is configured to receive inputs from two or more of the sensors and to provide outputs relating to each of the sensor inputs to the control unit via a common output.

The vehicle monitoring system may be configured to receive inputs from the plurality of sensors, and to output data indicative of each input to the control unit sequentially.

The communication channel may include a multiplexer.

The control unit may control and/or power the multiplexer.

Each output relating to a sensor input may be a mean average of samples of the sensor input received by the communication channel in a sample period.

The electronic vehicle monitoring system may include a data storage device to store one or more of:
- inputs to the communication channel,
- sample values,
- an average of sample values received in relation to a sensor in a sample period,
- output values provided to the control unit.

The or each component monitored may be a brake pad, and each sensor may be a brake pad wear sensor.

The control unit may be an electronic braking system of the vehicle.

At least one of the plurality of sensors may be a brake pad wear sensor.

There is also provided a method of monitoring vehicle data including providing an electronic vehicle monitoring system including a plurality of sensors, each sensor being configured to monitor a component, assembly or system of a vehicle, a control unit configured to receive data relating to the or each monitored component, assembly or system, and a communication channel between each sensor and the control unit, the communication channel being configured to receive inputs from two or more of the sensors and to provide outputs relating to each of the sensor inputs to the control unit via a common output, the method including providing each of the sensor inputs to the communication channel, sampling each input to obtain a sample value for each input and outputting a value indicative of each sample value to the control unit sequentially via the common output.

The steps of receiving inputs from two or more of the sensors, sampling each input to obtain a sample value for each input and outputting a value indicative of each sample value to the control unit sequentially via the common output, may be performed using a multiplexer.

The method may include providing a warning signal to a user in the event of an error being detected in one or more sample values.

The method may include providing an indication to a user in response to a trigger event.

The method may include providing an indication to a user in anticipation of a trigger event.

A trigger event may be one of brake pad wear reaching a predetermined threshold, a brake stroke reaching a predetermined threshold, a brake adjustment reaching a predetermined threshold, and a temperature reaching a predetermined threshold.

Each sensor may be configured to obtain data relating to one or more vehicle components and/or characteristics.

A sensor may be configured to obtain temperature data of a brake component/assembly and/or a sensor may be configured to obtain brake pad wear, a load applied to a component/assembly, a brake stroke length, a brake adjustment and so on.

The type of sensors and the monitoring required to be carried out may be dependent upon the type, size and/or configuration of the vehicle and the use of the vehicle. The data obtained by each sensor may be communicated to the control unit.

The vehicle according to the invention can be a trailer, in particular a semitrailer, and/or a utility vehicle.

The multiplexer may include several, in particular nine, channels, each corresponding to a source. Each of the sources may be an analogue source. The sources may include internal sources and external sources. Each external source may be a signal from one of the plurality of sensors.

The multiplexer may be powered by energising a first input of the multiplexer to a first value, e.g. preferable 10V.

The value of each channel may be sampled during a sample period. Each sample period may be 100ms.

The channels of the multiplexer may be sequenced by applying a sequencing pulse, in particular a negative pulse, to the first input. The sequencing pulse may have a duration of between , in particular approximately, 7ms and 70ms, preferable 10ms. Each time a sequencing pulse is applied, the multiplexer may sequentially clock to output the next channel, to begin the sample period for the next channel.

All channels of the multiplexer may be read sequentially.

The time taken to sample all of the channels may be in the order of 1 second.

The multiplexer may comprise several, in particular nine, channels.

One or more, in particular two, channels of the multiplexer may have fixed outputs. Each output may be a fixed proportion of a supply voltage. These channels may be the "internal" sources.

The supply voltage may be 5V, for example. One channel may be 10% of the supply voltage. Another channel may be 90% of the supply voltage.

The first two channels may be used as "start of frame" markers. The first two channels may be used as calibration values, by the control unit. Each of the other channels may correspond with a signal from one of the plurality of sensors.

One of the channels not associated with one of the plurality of sensors may output approximately 0V, regardless of how many more clock pulses may be received, so as to provide an "end of frame" marker.

Each "frame" or complete sequence of channels may have a duration of approximately 1 second.

Applying a longer duration negative pulse than the sequencing pulse may reset the multiplexer, to begin the sequence again at the first channel. In other words, the multiplexer might be designed a way according to which a longer duration negative pulse than the sequencing pulse may reset the multiplexer. The reset pulse may have a duration that is several times longer than the sequencing pulse, in particular ten times longer. The reset pulse may have a duration of more than 70ms, preferable 100ms.

Each channel may be sampled a plurality of times during the sample period, preferable eight times.

The sample period may include eight sample points.

Each channel may be sampled every 10ms, beginning 10ms after the rising clock edge. The next clock pulse to sequence to the next channel, would occur 10ms after the last sample point of a channel.

The mean average of the values obtained during each sample period may be obtained, and output to the control unit.

The sequencing of channels may be repeated, for example a fixed or variable number of times or indefinitely, preferable until power is remove, and/or until an end signal is received.

The multiplexer may be reset by removing power, preferable for a predetermined period of time or longer 500ms, and allowing a power-on reset.

The data obtained may be indicative of a trigger event. The control unit may identify a trigger event from the inputs received via the communication channel. A trigger event may be indicated by a sample value falling outside a predetermined range and/or reaching or exceeding a threshold value.

A trigger event may cause a corresponding response. If the data obtained is indicative of a fault and/or that checks or maintenance should be carried out, for example, a signal may be provided to a driver of the vehicle, for example via a display.

Data, which may include a signal indicating that a trigger event has occurred, may be transmitted remotely, for example to a further control unit at a control centre and/or carried by another vehicle, or carried by another part of the same vehicle, for example if the control unit is carried on the trailer of the vehicle, the further control unit may be located on the tractor of the vehicle. A trigger event may correspond to the component or system or characteristic being monitored.

A trigger event may be one of brake pad wear reaching a predetermined threshold, a brake stroke reaching a predetermined threshold, a brake adjustment reaching a predetermined threshold, and a temperature reaching a predetermined threshold, for example. A trigger event may also include identification of a fault in the monitoring system.

The control unit may be configured to analyse the data received via the communication channel, and identifying trigger events. The control unit may be configured to identify a trigger event type.

The control unit may be configured to identify the sensor or sensors from which a signal indicating a trigger event was received. The sensor or sensors from which a signal indicating a trigger event was received may be identified by identifying the time the signal was transmitted after the sequence pulse, for example.

The response to a trigger event may correspond to the type of trigger event identified and/or the component or system being monitored. The response to a trigger event may include carrying out further analysis of data, commencing an alternative type of component testing, providing a warning signal, e.g. the illumination of a lamp and/or an audible signal, and/or carrying out an automatic response, such as ceasing use of a component, and/or use of an alternative component, such as a component provided for redundancy purposes.

The data obtained may indicate that a predetermined threshold has been reached, for example that the amount of brake pad wear has reached a predetermined threshold, which may be indicative that a brake pad should be replaced imminently or immediately, or that a temperature has reached a predetermined threshold, and remedial action is required.

In the event of a signal indicative of an emergency or safety failure being received, then automatic remedial action may be carried out, for example to operate one or more brakes of the vehicle.

The control unit may be operable to control an electronic braking system of the vehicle, or provide a signal to the vehicle's EBS control unit, in particular such that a failed component or a component that is likely to fail imminently is not used, or is used in a controlled manner such as to conserve the component until such time as appropriate maintenance can be carried out.

The data obtained may be communicated locally in or on the vehicle, for example to a driver. The display may be inside and/or outside the vehicle, for example in a driver's cab, and/or at a position outside the vehicle that the driver is able (or required) to access.

The data obtained may be communicated externally of the vehicle, for example to a control centre and/or to another vehicle. The control unit may communicate the data obtained externally of the vehicle. This may enable maintenance to be scheduled and/or appropriate parts to be made available, thus potentially reducing downtime, and the likelihood of component failure during use of the vehicle. This also improves vehicle safety.

The monitoring system may be operable to detect and/or disregard errors, for example in data and/or input/output signals. This may reduce false alarms, for example.

Each channel may have a predetermined tolerance within which its sample values V are expected to fall.

If one or more sample values fall outside the predetermined tolerance, this may be indicative of a trigger event and a response may be initiated. A response may be initiated when a single sample value V in a single sample period t is outside its tolerance. The response may be initiated when a predetermined number of sample values V for one or more channels fall outside their respective tolerance.

The response may include that a sample value outside the tolerance may be disregarded. A predetermined number of samples from a channel in the same sample period and/or successive sample periods may be disregarded if they fall outside the tolerance. A predetermined number of sample values from different channels may be disregarded if they fall outside the respective tolerance.

Additionally, or alternatively, the response may include the automatically resetting the monitoring system, or a part of the monitoring system, for example the multiplexer. Additionally, or alternatively, the response may include providing a signal to a user. The signal to the user may include, for example, a signal prompting carrying out a manual reset, or a warning that the system will automatically reset, for example if a predetermined number of sample values have been disregarded. It will be appreciated that the signal to the user may take any appropriate form.

Values falling outside a predetermined range or tolerance may be disregarded and/or used to provide a warning of a potential error.

Stored data may be used for calibration purposes, and/or to determine appropriate tolerances. Stored data may be transmitted to a control centre.

Data may be stored and used to "train" the data monitoring system, for example updating values or tolerances based on previous data.

The data monitoring system described herein is advantageous since it does not include consumable parts as some existing monitoring systems do.

An electronic data monitoring system is accurate and provides more information than a physical, e.g. mechanical monitoring system. Error detection is possible, and data can be monitored over time, locally to and/or remotely of the vehicle, which may enable predictions and/or plans relating to maintenance and repair of monitored components/systems to be made. For example, it may be possible to note a pattern or trend in data relating to a component or system, which may indicate that failure (or reaching a threshold indicative of a requirement for maintenance) is imminent, whereas in prior art systems (e.g. completing a wired warning circuit when a threshold is reached) does not provide any prior notice that the warning circuit is about to be completed, for example because a brake pad has worn to a minimum threshold or because a brake adjuster is nearing its maximum adjustment. In other words, it is possible to anticipate when a trigger event is likely to occur using the present monitoring system and method.

Also, it is possible to identify which sensor has provided the input that has triggered the warning using the system and method as described herein.

In prior art systems, it is necessary to check all components that could potentially have caused the trigger event. The monitoring system and method described herein reduce the need to check every monitored component in response to a trigger event, since the system is able to identify each and every component or system that has caused a trigger even to be indicated. Data relating to other components may be reviewed, for example to check whether they may also be about to cause a trigger event, and to ascertain whether it would be advantageous to replace them at the same time as the component that caused a trigger event. This may prevent the need to carry out unnecessary physical checks and/or maintenance, and reduce the likelihood of repeated downtime of the vehicle.

### BRIEF DESCRIPTION OF THE FIGURES

In order that the present disclosure may be more readily understood, preferable embodiments thereof will now be described, by way of example only, with reference to the accompanying drawings, in which:
FIGURE 1 is a schematic view of a vehicle monitoring system; and

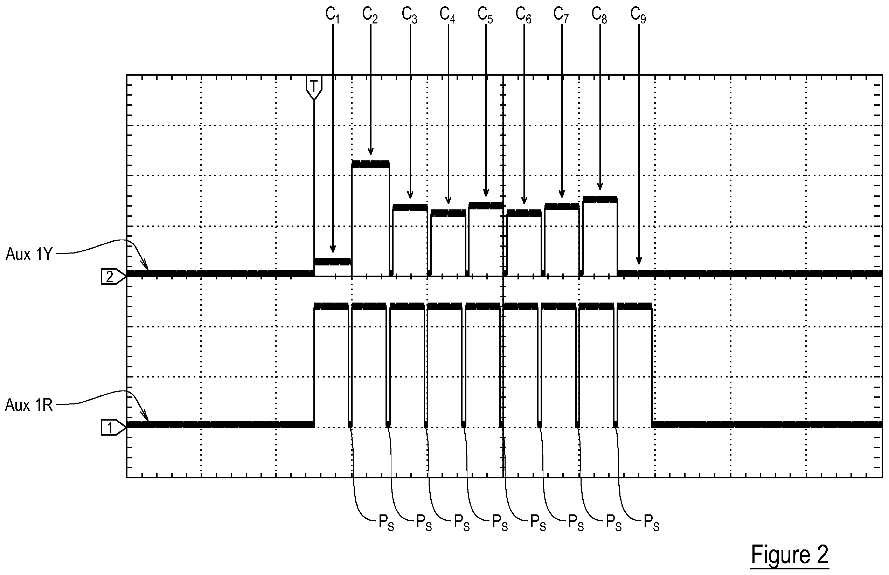

FIGURES 2, 3 and 4 show traces indicative of inputs to the vehicle monitoring system.

### DETAILED DESCRIPTION OF THE DISCLOSURE

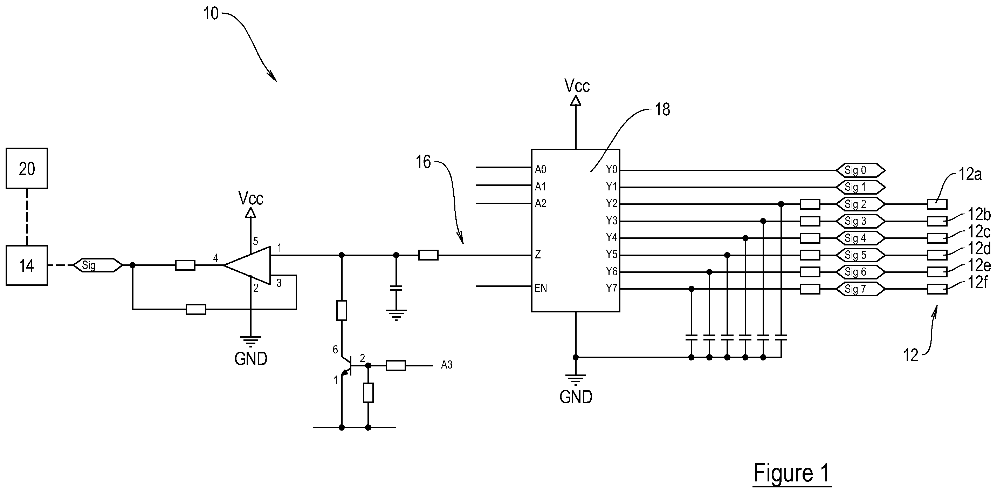

Referring to Figure 1, there is shown a vehicle monitoring system 10. The vehicle monitoring system 10 is an electronic vehicle monitoring system. The vehicle monitoring system 10 may include a plurality of sensors 12 and a control unit 14. Each sensor 12 may be configured to obtain data relating to one or more vehicle components and/or characteristics, for example a sensor 12 may be configured to obtain temperature data of a brake component/assembly, or brake pad wear, a load applied to a component/assembly, a brake stroke length, a brake adjustment and so on. The type of sensors and the monitoring required to be carried out may be dependent upon the type, size and/or configuration of the vehicle and the use of the vehicle. The data obtained by each sensor 12 may be communicated to the control unit 14. In the example shown there are six sensors 12a-f. It will be appreciated that an appropriate number of sensors may be selected, dependent upon the or each component and/or the or each characteristic to be monitored.

The control unit 14 may be a control unit of an electronic braking system of the vehicle. This is advantageous in that it is possible to use existing components rather than having to provide separate, dedicated control unit. The control unit 14 may be carried on the vehicle, for example in a tractor or trailer of the vehicle. The control unit 14 may be communicable with one or more further control units 20, which may be local, e.g. on the same vehicle (or the same part of the vehicle) or which may be remote, for example at a control centre or carried on another vehicle or another part of the same vehicle. Communication between the first control unit 14 and the or each further control unit 20 may be via wired communication and/or via wireless communication.

The vehicle data monitoring system 10 includes a communication channel 16 between the sensors 12 and the control unit 14. A plurality of sensors 12 may share a communication channel 16. The communication channel 16 may include a combinational logic circuit. The communication channel 16 may include a multiplexer 18, which is configured to receive a plurality of inputs, which may include one or more signals from one or more of the plurality of sensors 12, and to provide an output to the control unit 14. The output to the control unit 14 may be an analogue output. The output may be converted to a digital output. The multiplexer 18 may be directly or indirectly connected to the control unit 14, to provide the output to the control unit 14. The multiplexer 18 may be connected to a port of the control unit 14, for example an auxiliary input of an electronic braking system of the vehicle. The control unit 14 may be used to power and control the multiplexer 18.

The communication channel 16 may convert a first number of inputs into fewer outputs. The communication channel may convert a plurality of inputs into fewer outputs. The multiplexer 18 may effectively convert a plurality of inputs into a single output to the control unit 14. One or more of the inputs may be a signal from one of the sensors 12. Each input may be outputted to the control unit 14 sequentially, to enable fewer outputs, e.g. one, to be used to transmit a plurality of input signals. In other words, a common output channel may be used to transmit signals or data received from a plurality of sources/inputs.

In an example, the multiplexer 18 may include nine channels C1-C9, each corresponding to a source. Each of the sources may be an analogue source. The sources may include internal sources and external sources. Each external source may be a signal from one of the plurality of sensors 12. In the example shown in the figures, there are six channels (C2-C7) corresponding with external sources - sensors 12a-f, and two channels corresponding with internal sources.

The multiplexer 18 may be powered by energising a first input AUX1R of the multiplexer 18 to a first value, e.g. 10V. The value V of each channel C1-C9 may be sampled during a sample period t. Each sample period t may be 100ms, for example. The channels C1-C9 of the multiplexer 18 may be sequenced by applying a sequencing pulse P_{S}, for example a negative pulse, to the first input AUX1R. The sequencing pulse P_{S} may have a duration of between approximately 7ms and 70ms, for example 10ms. Each time a sequencing pulse P_{S} is applied, the multiplexer 18 may sequentially clock to output the next channel C1-9, to begin the sample period t for the next channel C1-9. All channels of the multiplexer 18 may be read sequentially. The time taken to sample all of the channels C1-9 may be in the order of 1 second.

Two channels of the multiplexer, e.g. C1 and C2, may have fixed outputs, for example each may be a fixed proportion of the supply voltage (Vcc). These channels are the "internal" sources. The supply voltage Vcc may be 5V, for example. One channel, e.g. C1, may be 10% of the supply voltage Vcc, for example. Another channel, e.g. C2, may be 90% of the supply voltage Vcc, for example. The first two channels C1 and C2 may be used as "start of frame" markers. The first two channels C1 and C2 may be used as calibration values, by the control unit 14. Each of the other channels (e.g. C3-C8 in this example) may correspond with a signal from one of the plurality of sensors 12a-f. One of the channels not associated with one of the plurality of sensors, e.g. C9 in this example, may output approximately 0V, regardless of how many more clock pulses may be received, so as to provide an "end of frame" marker. Each "frame" or complete sequence of channels may have a duration of approximately 1 second. Applying a longer duration negative pulse than the sequencing pulse P_{S} may reset the multiplexer 18, to begin the sequence again at the first channel C1. The reset pulse P_{R} may have a duration that is several times longer than the sequencing pulse P_{S}, e.g. ten times longer. The reset pulse P_{R} may have a duration of more than 70ms, e.g. 100ms, in this example.

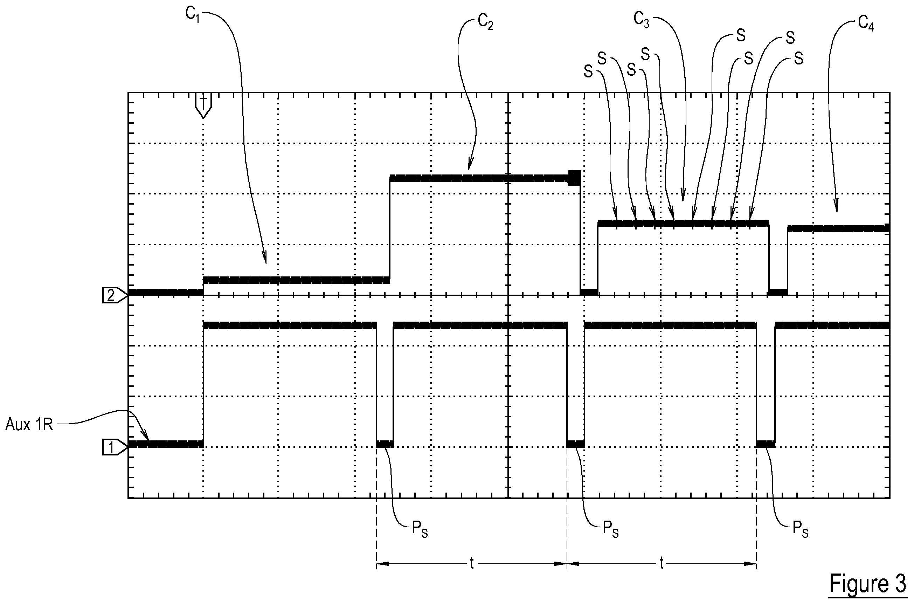

Each channel may be sampled a plurality of times during the sample period t, for example eight times (as shown in Figure 3). The sample period t may include eight sample points S, for example. Each channel may be sampled every 10ms, for example, beginning 10ms after the rising clock edge. The next clock pulse (sequencing pulse P_{S}) to sequence to the next channel, would occur 10ms after the last sample point S of a channel C1-C9. The mean average of the values obtained during each sample period t may be obtained, and output to the control unit 14.

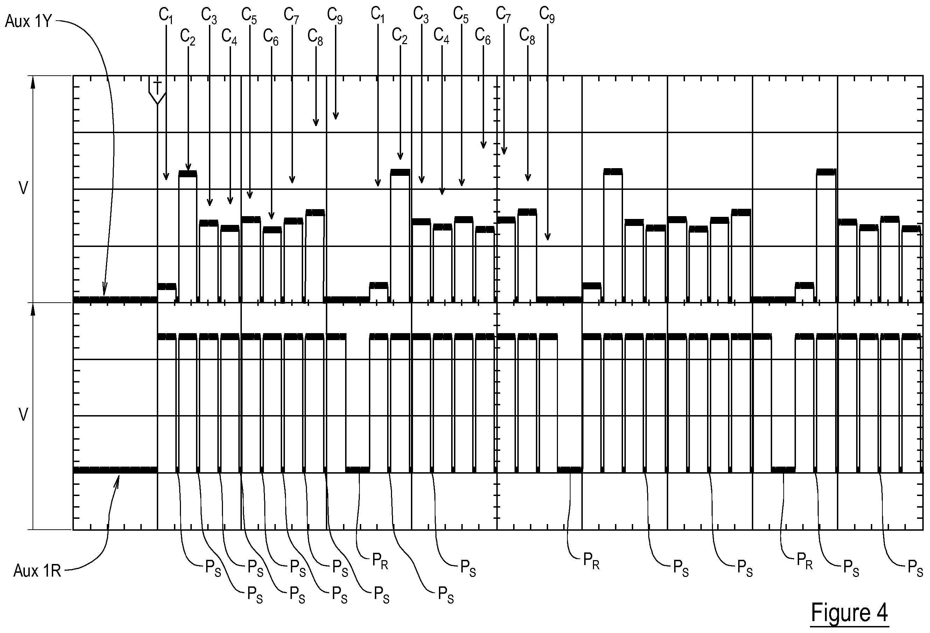

The sequencing of channels may be repeated, for example a fixed or variable number of times or indefinitely (e.g. until power is removed) and/or until an end signal is received. Figure 4 shows three complete sequences (frames), and part of a fourth sequence (up to C6).

The multiplexer 18 may be reset by removing power, for example for a predetermined period of time or longer, e.g. 500ms, and allowing a power-on reset (POR).

The data obtained may be indicative of a trigger event. The control unit 14 may identify a trigger event from the inputs received via the communication channel 16. A trigger event may be indicated by a sample value falling outside a predetermined range and/or reaching or exceeding a threshold value. A trigger event may cause a corresponding response. If the data obtained is indicative of a fault and/or that checks or maintenance should be carried out, for example, a signal may be provided to a driver of the vehicle, for example via a display. Data, which may include a signal indicating that a trigger event has occurred, may be transmitted remotely, for example to a further control unit 20 at a control centre and/or carried by another vehicle, or carried by another part of the same vehicle, for example if the control unit 14 is carried on the trailer of the vehicle, the further control unit 20 may be located on the tractor of the vehicle. A trigger event may correspond to the component or system or characteristic being monitored. A trigger event may be one of brake pad wear reaching a predetermined threshold, a brake stroke reaching a predetermined threshold, a brake adjustment reaching a predetermined threshold, and a temperature reaching a predetermined threshold, for example. A trigger event may also include identification of a fault in the monitoring system. The control unit 14 may be configured to analyse the data received via the communication channel 16, and identifying trigger events. The control unit 14 may be configured to identify a trigger event type. The control unit 14 may be configured to identify the sensor or sensors 12 from which a signal indicating a trigger event was received. The sensor or sensors 12 from which a signal indicating a trigger event was received may be identified by identifying the time the signal was transmitted after the sequence pulse P_{S}, for example.

The response to a trigger event may correspond to the type of trigger event identified and/or the component or system being monitored. The response to a trigger event may include carrying out further analysis of data, commencing an alternative type of component testing, providing a warning signal, e.g. the illumination of a lamp and/or an audible signal, and/or carrying out an automatic response, such as ceasing use of a component, and/or use of an alternative component, such as a component provided for redundancy purposes.

The data obtained may indicate that a predetermined threshold has been reached, for example that the amount of brake pad wear has reached a predetermined threshold, which may be indicative that a brake pad should be replaced imminently or immediately, or that a temperature has reached a predetermined threshold, and remedial action is required.

In the event of a signal indicative of an emergency or safety failure being received, then automatic remedial action may be carried out, for example to operate one or more brakes of the vehicle. The control unit 14 may be operable to control an electronic braking system of the vehicle, or provide a signal to the vehicle's EBS control unit, such that a failed component or a component that is likely to fail imminently is not used, or is used in a controlled manner such as to conserve the component until such time as appropriate maintenance can be carried out.

The data obtained may be communicated locally in or on the vehicle, for example to a driver. The display may be inside and/or outside the vehicle, for example in a driver's cab, and/or at a position outside the vehicle that the driver is able (or required) to access.

The data obtained may be communicated externally of the vehicle, for example to a control centre and/or to another vehicle. The control unit 14 may communicate the data obtained externally of the vehicle. This may enable maintenance to be scheduled and/or appropriate parts to be made available, thus potentially reducing downtime, and the likelihood of component failure during use of the vehicle. This also improves vehicle safety.

The monitoring system may be operable to detect and/or disregard errors, for example in data and/or input/output signals. This may reduce false alarms, for example.

Each channel C1-C9 may have a predetermined tolerance within which its sample values V are expected to fall. If one or more sample values fall outside the predetermined tolerance, this may be indicative of a trigger event and a response may be initiated. A response may be initiated when a single sample value V in a single sample period t is outside its tolerance. The response may be initiated when a predetermined number of sample values V for one or more channels C1-C9 fall outside their respective tolerance. The response may include that a sample value outside the tolerance may be disregarded. A predetermined number of samples from a channel in the same sample period and/or successive sample periods may be disregarded if they fall outside the tolerance. A predetermined number of sample values from different channels C1-C9 may be disregarded if they fall outside the respective tolerance. Additionally, or alternatively, the response may include the automatically resetting the monitoring system, or a part of the monitoring system, for example the multiplexer 18. Additionally, or alternatively, the response may include providing a signal to a user. The signal to the user may include, for example, a signal prompting carrying out a manual reset, or a warning that the system will automatically reset, for example if a predetermined number of sample values have been disregarded. It will be appreciated that the signal to the user may take any appropriate form.

Suggested predetermined tolerances for the example system described herein may be as follows:
Channel 1 - sample value tolerance may be ± 2% of Vcc,for example C1 may be approximately 10% of the supply voltage Vcc ±2% of Vcc, e.g. 8%-12% of supply voltage,
Channel 2 - sample value tolerance may be 90% of Vcc ± 2% of Vcc, e.g. 88%-92% of supply voltage Vcc.
Channels 3 - 8 (channels associated with a respective one of the plurality of sensors 12) - sample value range may be between 20% and 80% of supply voltage Vcc ± 2% of Vcc, e.g. 18 - 82% of Vcc.
Channels 9 onwards (i.e. channels after those associated with a sensor 12) - sample value may be approximately 0V with a tolerance of ±2% of Vcc, e.g. between 0% and 2% of supply voltage Vcc, in practice.

When sampling any channel C1-C9 the samples used to provide a mean average for the sample value of the channel must have a range of less than 2%.

The supply voltage (Vcc) may be approximately 5V.

The sample values for the reference channels (channels 1 and 2 in this example) may be assumed to be 10% and 90%, respectively, of the supply voltage Vcc, and these values may then be used to calibrate the sample values of each of the other channels C3-C9).

Values falling outside a predetermined range or tolerance may be disregarded and/or used to provide a warning of a potential error.

The data monitoring system may include a data storage device which may store data inputs and/or outputs and/or sample values of the multiplexer 18, for example. The data storage device may be configured to store one or more of:
- inputs to the communication channel,
- sample values,
- an average of sample values received in relation to a sensor in a sample period,
- output values provided to the control unit.

Stored data may be used for calibration purposes, and/or to determine appropriate tolerances. Stored data may be transmitted to a control centre.

Data may be stored and used to "train" the data monitoring system, for example updating values or tolerances based on previous data.

The data monitoring system described herein is advantageous since it does not include consumable parts as some existing monitoring systems do. An electronic data monitoring system is accurate and provides more information than a physical, e.g. mechanical monitoring system. Error detection is possible, and data can be monitored over time, locally to and/or remotely of the vehicle, which may enable predictions and/or plans relating to maintenance and repair of monitored components/systems to be made. For example, it may be possible to note a pattern or trend in data relating to a component or system, which may indicate that failure (or reaching a threshold indicative of a requirement for maintenance) is imminent, whereas in prior art systems (e.g. completing a wired warning circuit when a threshold is reached) does not provide any prior notice that the warning circuit is about to be completed, for example because a brake pad has worn to a minimum threshold or because a brake adjuster is nearing its maximum adjustment. In other words, it is possible to anticipate when a trigger event is likely to occur using the present monitoring system and method. Also, it is possible to identify which sensor has provided the input that has triggered the warning using the system and method as described herein. In prior art systems, it is necessary to check all components that could potentially have caused the trigger event. The monitoring system and method described herein reduce the need to check every monitored component in response to a trigger event, since the system is able to identify each and every component or system that has caused a trigger even to be indicated. Data relating to other components may be reviewed, for example to check whether they may also be about to cause a trigger event, and to ascertain whether it would be advantageous to replace them at the same time as the component that caused a trigger event. This may prevent the need to carry out unnecessary physical checks and/or maintenance, and reduce the likelihood of repeated downtime of the vehicle.

When used in this specification and claims, the terms "comprises" and "comprising" and variations thereof mean that the specified features, steps or integers are included. The terms are not to be interpreted to exclude the presence of other features, steps or components.

The invention may also broadly consist in the parts, elements, steps, examples and/or features referred to or indicated in the specification individually or collectively in any and all combinations of two or more said parts, elements, steps, examples and/or features. In particular, one or more features in any of the embodiments described herein may be combined with one or more features from any other embodiment(s) described herein.

Protection may be sought for any features disclosed in any one or more published documents referenced herein in combination with the present disclosure.

Although certain example embodiments of the invention have been described, the scope of the appended claims is not intended to be limited solely to these embodiments. The claims are to be construed literally, purposively, and/or to encompass equivalents.

## Claims

1. An electronic vehicle monitoring system (10) including a plurality of sensors (12), each sensor being configured to monitor a component, assembly or system of a vehicle, a control unit (14) configured to receive data relating to the or each monitored component, assembly or system, and a communication channel (16) between each sensor and the control unit (14), wherein the communication channel (16) is configured to receive inputs from two or more of the sensors (12) and to provide outputs relating to each of the sensor inputs to the control unit (14) via a common output.

2. An electronic vehicle monitoring system (10), in particular according to claim 1, configured to receive inputs from the plurality of sensors (12), and to output data indicative of each input to the control unit (14) sequentially.

3. An electronic vehicle monitoring system (10) according to any of the preceding claims wherein the communication channel (16) includes a multiplexer (18).

4. An electronic vehicle data monitoring system (10) according to claim 3 wherein the control unit (14) controls and/or powers the multiplexer (18).

5. An electronic vehicle monitoring system (10) according to any of the preceding claims wherein each output relating to a sensor input is a mean average of samples of the sensor input received by the communication channel (16) in a sample period.

6. An electronic vehicle monitoring system (10) according to claim 5 including a data storage device to store one or more of:
inputs to the communication channel (16),
sample values,
an average of sample values received in relation to a sensor in a sample period,
output values provided to the control unit (14).

7. An electronic vehicle monitoring system (10) according to any of the preceding claims wherein the or each component monitored is a brake pad, and each sensor is a brake pad wear sensor.

8. An electronic vehicle monitoring system (10) according to any of the preceding claims wherein the control unit (14) is an electronic braking system of the vehicle.

9. An electronic vehicle monitoring system (10) according to any of the preceding claims wherein at least one of the plurality of sensors (12) is a brake pad wear sensor.

10. A method of monitoring vehicle data including providing an electronic vehicle monitoring system including a plurality of sensors (12), each sensor being configured to monitor a component, assembly or system of a vehicle, a control unit (14) configured to receive data relating to the or each monitored component, assembly or system, and a communication channel (16) between each sensor and the control unit (14), the communication channel (16) being configured to receive inputs from two or more of the sensors (12) and to provide outputs relating to each of the sensor inputs to the control unit (14) via a common output, the method including providing each of the sensor inputs to the communication channel (16), sampling each input to obtain a sample value for each input and outputting a value indicative of each sample value to the control unit (14) sequentially via the common output.

11. A method according to claim 10 wherein the steps of receiving inputs from two or more of the sensors (12), sampling each input to obtain a sample value for each input and outputting a value indicative of each sample value to the control unit (14) sequentially via the common output, are performed using a multiplexer (18).

12. A method according to claim 10 or claim 11 including providing a warning signal to a user in the event of an error being detected in one or more sample values.

13. A method according to any of claims 10 to 12 including providing an indication to a user in response to a trigger event.

14. A method according to any of claims 10 to 13 including providing an indication to a user in anticipation of a trigger event.

15. A method according to claim 13 or 14 wherein a trigger event is one of brake pad wear reaching a predetermined threshold, a brake stroke reaching a predetermined threshold, a brake adjustment reaching a predetermined threshold, and a temperature reaching a predetermined threshold.
